# EUROPEAN PATENT APPLICATION

(11) **EP 1 571 129 A1**
(43) Date of publication of application: **07.09.2005**
(21) Application number: 05396009.2
(22) Date of filing: 28.02.2005
(51) Int. Cl.: C02F 11/02, C02F 3/34

(54) **Method and system for processing biowaste**

(30) Priority: 01.03.2004 FI 20040325
(71) Applicant: Hitech Chemicals Oy, 00180 Helsinki (FI)
(72) Inventor: Mikko, Hakala, c/o Hitech Chemicals Oy, 00180 Helsinki (FI)
(74) Representative: Partio, Erja

(57) **Abstract**

The present invention relates to a method for processing the biowaste produced in a property for each property specifically so that a) the biowaste is processed mechanically, b) the mechanically processed biowaste is separated into a solid, biochemically nondegradable and degradable part, c) the separated degradable part is processed biochemically, and d) the biochemically processed degradable part is introduced into the sewer network; and in which method, steps a) - c) are implemented in a random order. Further, the invention relates to a system for processing the biowaste produced in a property for each property specifically.

## Description

The invention relates to a method as defined in the preamble of claim 1. Further, the invention relates to a system as defined in the preamble of claim 13 for processing biowaste for each property specifically.

### PRIOR ART

Biowaste is used to mean organic, biologically degradable, solid and non-toxic waste, such as food waste and other foodstuff waste, garden and park waste, as well as organic production waste and/or other corresponding waste.

Biowaste is produced daily in properties such as houses, restaurants, cafeterias, department stores, in conjunction with shopping centres, and other corresponding premises. At present, biowaste is collected in each property into separate containers designated for biowaste, from which the biowaste is emptied into delivery trucks and is transported to be processed further in separate plants.

The problem with the prior-art processing methods and arrangements of biowaste is the laborious, cumbersome and costly transportation and further processing of biowaste in a separate plant. This incurs a lot of transportation, labour and processing costs, which are payable by different public utility companies, house corporations and restaurants. A further problem is the hygiene of the collection site of biowaste, which is due to the often deficient washing and purification of the collection vessel. Also the long emptying intervals of the collection vessels of biowaste may result in that the biowaste can pollute its environment.

The objective of the present invention is to eliminate the drawbacks referred to above.

One specific objective of the invention is to disclose a new method and system for processing biowaste for each property specifically, simplifying the processing of biowaste and reducing the costs due to the processing.

### SUMMARY OF THE INVENTION

The method of the invention is characterised by what has been presented in the claims.

The invention is based on a research work carried out, during which it was surprisingly found out that biowaste can be processed for each property specifically by means of micro-organisms there where it is produced so that the end product of processed biowaste can be introduced into a regular sewer network.

A property is used to mean a house, e.g. a block of flats, a restaurant, a cafeteria, a department store or any other similar property.

The method in accordance with the invention includes the steps of:
a) mechanically processing biowaste;
b) separating the mechanically processed biowaste into a solid, biochemically non-degradable part and degradable part;
c) processing the separated degradable part biochemically; and
d) introducing the biochemically processed degradable part into a sewer network;
and in which method, steps a) - c) are implemented in a random order.

In one embodiment of the invention, a) biowaste is processed mechanically, c) the mechanically processed biowaste is processed biochemically and b) the biochemically processed biowaste is separated into a solid, biochemically non-degradable part and degradable part. Thereafter, the separated degradable part is introduced into a sewer network. If desired, after the solid, biochemically non-degradable part and degradable part have been separated, the degradable part can be again processed biochemically prior to introducing it into the sewer network.

In the method of the invention, biowaste is mechanically processed to crush the cell structures of biowaste so that in the biochemical processing phase, the cell structure is suitable to be used and degraded by micro-organisms. If desired, it is possible to add water among the biowaste during the mechanical processing of the biowaste.

The mixture containing micro-organisms to be used in biochemical processing can be added any time during phase a) - c) and/or between these phases. The mixture containing micro-organisms can be added among the biowaste being processed e.g. during the crushing of the biowaste and/or thereafter prior to separating the biowaste into a solid, biochemically non-degradable part and degradable part; and/or during the separation of the solid, biochemically non-degradable part and the degradable part; and/or during the biochemical processing of the biowaste.

Micro-organisms are generally used to mean bacteria, protozoa, fungi and/or viruses. According to the present invention, one preferably uses bacteria and/or mixtures thereof to biochemically process biowaste. A bacterial mixture can be any mixture of different bacterial genera, species and/or strains that is known to be capable of degrading biowaste. One preferred mixture for biochemically processing biowaste includes bacteria of the *Bacillus* genus, such as *Bacillus subtilis, Basillus licheniformis* and *Bacillus polymyxa*. A mixture to be used in a biochemical processing phase can also include any other agents to be conventionally used in a mixture of this kind, such as water, solvents, preservatives, surface-active agents, colorants, fragrances and/or the like agents.

Biochemical processing is used to mean that micro-organisms such as bacteria degrade biowaste by producing, as a result of their metabolism, enzymes such as lipases that degrade fats; proteases that degrade proteins; amylases that degrade starch; and cellulases that degrade fibres. In other words, as a result of biochemical processing, fats, proteins, carbohydrates, urea and/or other corresponding agents degrade, and an aqueous degrading part such as a solution part is obtained. Biowaste can processed biochemically for 1 minute - 1 week, preferably for 5 minutes - 24 hours.

Prior to biochemical processing, biowaste can be separated into a solid, biochemically non-degradable and degradable part. A biochemically degradable part is used to mean any such material that has ended up in the biowaste and is suitable to be degraded by micro-organisms. In the different phases of the method, the biochemically degradable part can be in the form of a coarse crush, sludge, suspension, mixture and/or solution and/or in any other similar form. A solid, biochemically non-degradable part is used to mean any material that, in the method of the present invention, is not suitable to be utilised by micro-organisms. A solid, biochemically non-degradable part can be cutlery, such as a spoon, plastic material and/or the like material that was carried along with the biowaste. A biochemically non-degradable part is further used to mean e.g. a bone and/or any other organic material per se that is not suitable to be degraded by micro-organisms. The solid part is introduced into a removal component such as a sieve or sleeve that can be emptied when necessary. Alternatively, the biowaste can be separated into a solid, biochemically non-degradable part and degradable part after the biochemical processing of the biowaste.

The separated, biochemically processed degradable part can be finally introduced into a sewer network. The degradable part, which can be e.g. in the form of a solution, can contain the micro-organism mixture referred to above, such as a bacterial mixture, water, and possibly small biological solid matter particles, such as organic biowaste residue. In the sewer system, the micro-organisms further degrade the biowaste residue possible contained in the degradable part and purify the sewerage pipe itself from waste possible contained in it. Optionally, the separated, biochemically processed degradable part can be kept in a separate container prior to its introducing into the sewer network. It is possible to take samples from the container to determine the quality and different parameters of the processed degradable part prior to introducing it into the sewer network.

If desired, the biowaste to be processed in accordance with the present invention can be preprocessed prior to its processing according to the method of the present invention. Pre-processing is used to mean e.g. the treatment with heat of the biowaste to be processed. The treatment with heat can be implemented in any manner known per se. When pre-processing biowaste by means of treatment with heat, the biowaste must be cooled before adding the micro-organism mixture to be used among the biowaste so that the micro-organisms of said mixture are not damaged due to heat.

As presented above, the order and duration of the different phases of the method can be changed as desired in a manner suitable for a particular property. Moreover, it is possible to repeat one or more of the phases of the method once or more prior to introducing the end product into the sewer network.

If desired, the proceeding of the treatment process of biowaste through the different phases, as well as the duration of the different phases, can be controlled by means of an automatic control system. The control system can be any conventional system. In the method of the invention, it is also possible to identify the deliverer of the biowaste and to measure how much biowaste is delivered for processing. This enables fair and direct billing for the costs resulting from the processing of biowaste.

Further, the present invention relates to a system for processing the biowaste produced in a property for each property specifically. The system includes:
- a processing device for mechanically processing biowaste;
- a separation device for separating the solid, biochemically non-degradable part and degradable part of biowaste;
- a reaction vessel for biochemically processing biowaste; and
- exhaust means for introducing the degradable part into the sewer network.

The system in accordance with the invention can include one or more processing devices for mechanically processing biowaste. The processing device can be e.g. a crusher, a shredder, a mill and/or the like device which is used to crush biowaste, i.e. the cell structure of biowaste is decomposed.

In addition, the system may include one or more separation devices for separating the solid, biochemically non-degradable part and degradable part of biowaste. The solid, biochemically non-degradable part of biowaste can be removed before the implementation of the biochemical processing and/or after the implementation of the biochemical processing. The separation device can be e.g. a sling and/or the like device from which the solid, biochemically non-degradable part of biowaste is separated into a removal component that can be emptied. The removal component can be e.g. a sieve or sleeve.

The system can also include one or more reaction vessels in which biowaste is processed biochemically. The reaction vessel can be any conventional container into which the biowaste can be introduced, if desired, and into which it is possible to add the micro-organism and/or micro-organism mixture to be used in the biochemical processing. If desired, the conditions such as temperature, humidity and/or the like parameters of the reaction vessel and of the rest of the components of the system can be controlled.

Further, the system can include transfer means such as pipes, pumps and/or the like means for transferring the biowaste to be processed from one component of the system to another.

The system can also include exhaust means by means of which the degradable part of the biowaste is introduced into the sewer network after all the processing phases have been completed. The system can further include a separate container in which the separated, biochemically processed degradable part is kept prior to its introducing into the sewer network.

The system can further include a control system enabling one to automatically control the processing of biowaste. The system can also include means enabling one to identify the deliverer of the biowaste and means enabling one to measure the amount of biowaste introduced into the system. This enables one to simply bill for the costs resulting from the processing of biowaste.

The number and/or order of the different components of the system, and thus the implementation order of the different phases of the method can be varied for each property specifically, in order to achieve the best possible result.

As compared to the prior-art sorting, transportation and processing method of biowaste, the present invention has the advantage that the processing of biowaste is simplified, and the cost efficiency of the processing is improved at the same time. The previously known physical sorting of biowaste into different containers and the collection and transportation thereof from property premises to be further processed in separate waste treatment plants is costly and inefficient. The invention provides the advantage that biowaste is processed there where it is produced, and it is not necessary to transport the waste to be further processed.

The invention further has the advantage that if desired, the processing of biowaste can be implemented and controlled by means of a specific process management method, in contrast to the previously used manual collection of waste containers.

The invention further has the advantage that it is environmentally friendly and safe both for users and the sewerage pipes, into which the processed biowaste is finally introduced. The micro-organism mixture to be used for the processing of biowaste does not damage the pipes; instead, on the contrary, keeps the sewerage system such as pipes, floor drains and fat separators in good repair by degrading the waste such as fat and other organic material possibly included in them. The conventional chemicals used for the treatment of waste cause corrosion, and they often are toxic to people, animals and the environment. The invention further has the advantage that biowaste is not transported from the property by means of delivery trucks, decreasing the environmental problems associated with the transportation.

The method and equipment in accordance with the invention enable one to considerably reduce the odour detriments resulting from the processing of biowaste. The cleaning problems previously associated with the collection of biowaste are also eliminated. The invention further has the advantage that it is a hygienic treatment process preventing e.g. the spreading of micro-organisms in the treatment place and in its environment.

### LIST OF FIGURES

In the following section, the invention will be described in detail by means of embodiment examples with reference to the accompanying drawing, in which

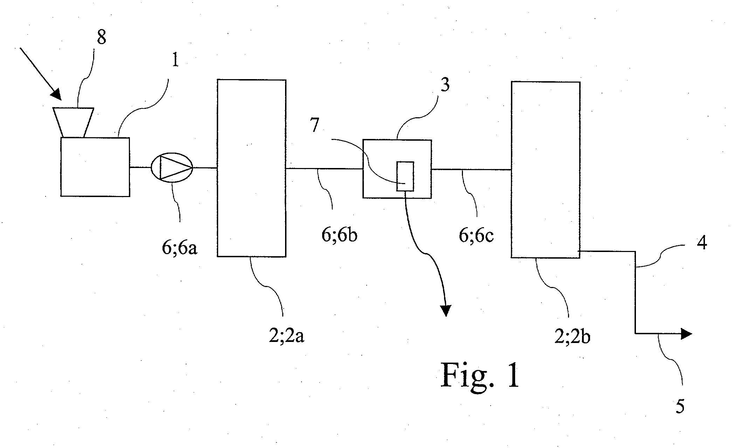

Fig. 1 represents one diagram in accordance with one embodiment of the system in accordance with the present invention.

### DETAILED DESCRIPTION OF THE INVENTION

Fig. 1 shows a system in accordance with one embodiment of the invention for processing biowaste for each property specifically. The system as shown in Fig. 1 can be arranged in conjunction with any conventional property such as a house or restaurant.

The system in accordance with one embodiment of the invention as shown in Fig. 1 includes a processing device 1, two reaction vessels 2a,2b, a separation device 3 and exhaust means 4.

Introduced into the processing device 1 of the system as shown in Fig. 1 is, via a funnel 8, the biowaste produced in a property for processing it according to the invention. In the processing device 1, such as a crusher, the biowaste is crushed so that its cell structures are degraded. Thereafter, the crushed biowaste is pumped by means of transfer means 6a, e.g. through a pipe, to the first reaction vessel 2a, in which the crushed biowaste is processed biochemically. In this embodiment of the invention, the biochemical processing is implemented using a mixture of the bacteria of the Bacillus genus, water and organic solvent, which mixture also contains some preservatives, colorants and fragrances. If desired, the conditions such as humidity, temperature and pressure of the reaction vessel 2 and of the rest of the components of the system can be controlled during the process, in order to achieve optimal processing conditions.

From the biochemical processing, the mixture containing biowaste is transported further to a separation device 3 by means of transfer means 6b. In the separation device 3, from the biochemically processed biowaste there is removed the solid, biochemically non-degradable part possibly included therein. For example, spoons, plastic and the like materials are removed into the so-called removal component 7 of the separation device 3, such as a sieve, which can be emptied, when necessary. When the solid, biochemically non-degradable part is separated from the biowaste, there remains the degradable part, i.e. the so-called solution part that contains e.g. bacteria, water and biological solid matter.

In the system in accordance with one embodiment of the present invention in accordance with fig. 1, the degradable part is, in addition, introduced, by means of the transfer means 6c, into the second reaction vessel 2b, in which the biochemical processing is repeated once more.

Finally, the biochemically processed degradable part is introduced, by means of the exhaust means 4, into the sewer network 5 of a property, in which the bacteria continue to degrade the waste and purify the pipes.

The invention is not limited merely to the embodiment examples referred to above; instead many variations are possible within the scope of the inventive idea defined by the claims.

## Claims

1. A method for processing the biowaste produced in a property for each property specifically, **characterised in that** the method comprises the steps of:
a) processing the biowaste mechanically;
b) separating the mechanically processed biowaste into a solid, biochemically non-degradable part and degradable part;
c) processing the separated degradable part biochemically; and
d) introducing the biochemically processed degradable part into a sewer network;
and in which method steps a) - c) are implemented in a random order.

2. The method as defined in claim 1, **characterised in that** a) the biowaste is processed mechanically, c) the mechanically processed biowaste is processed biochemically and b) the biochemically processed biowaste is separated into a solid, biochemically non-degradable part and degradable part, which separated degradable part is introduced into the sewer network.

3. The method as defined in claim 2, **characterised in that** after step b) the degradable part is processed biochemically prior to introducing it into the sewer network.

4. The method as defined in any one of claims 1-3, **characterised in that** the biowaste is processed biochemically by means of a micro-organism and/or a micro-organism mixture.

5. The method as defined in claim 4, **characterised in that** the micro-organism and/or the micro-organism mixture is a bacterium and/or a bacterial mixture.

6. The method as defined in claim 4 or 5, **characterised in that** one uses one or more bacteria of the Bacillus genus and/or a mixture containing these bacteria.

7. The method as defined in any one of claims 1-6, **characterised in that** the biowaste is processed biochemically so that fat, proteins, carbohydrates, urea and/or the like agents degrade.

8. The method as defined in any one of claims 1-7, **characterised in that** the biowaste is processed biochemically for 1 minute - 1 week, preferably for 5 minutes - 24 hours.

9. The method as defined in any one of claims 1-8, **characterised in that** the solid part separated at step b) is removed.

10. The method as defined in any one of claims 1-9, **characterised in that** steps a)-c) or one or more of steps a)-c) are repeated once or more prior to introducing the degradable part into the sewer network.

11. The method as defined in any one of claims 1-10, **characterised in that** the proceeding of the biowaste through the different steps of the method and the duration of the different phases are controlled by means of a control system.

12. The method as defined in any one of claims 1-11, **characterised in that** the deliverer of the biowaste is identified and the amount of biowaste to be fed is measured.

13. A system for processing the biowaste produced in a property for each property specifically, **characterised in that** the system comprises:
- a processing device (1) for mechanically processing the biowaste:
- a separation device (3) for separating the solid, biochemically non-degradable part and degradable part of biowaste ;
- a reaction vessel (2) for biochemically processing the biowaste; and
- exhaust means (4) for introducing the processed biowaste into the sewer network (5).

14. The system as defined in claim 13, **characterised in that** the order of the different components of the system can be varied.

15. The system as defined in claim 13 or 14, **characterised in that** the processing device (1) for mechanically processing the biowaste is a crusher, a shredder, a mill and/or the like device.

16. The system as defined in of claims 13-15, **characterised in that** the reaction vessel (2) contains micro-organisms and/or a mixture thereof, preferably bacteria and/or a mixture thereof, and most preferably the bacteria of the Bacillus genus and/or a mixture containing these bacteria.

17. The system as defined in any one of claims 13-16, **characterised in that** arranged in the reaction vessel (2) are controllable conditions.

18. The system as defined in any one of claims 13-17, **characterised in that** the separation device (3) is a sling and/or the like means.

19. The system as defined in any one of claims 13-18, **characterised in that** the system includes transfer means (6) for transferring the biowaste being processed between the different components of the system.

20. The system as defined in claim 19, **characterised in that** the transfer means (6) are pipes, pumps and/or the like means.

21. The system as defined in any one of claims 13-20, **characterised in that** the system includes a control system for automatic control of the processing of biowaste.

22. The system as defined in any one of claims 13-21, **characterised in that** the system includes means for identifying the deliverer of biowaste and means for measuring the amount of biowaste being fed.
